(19) **Europäisches Patentamt**
**European Patent Office**
**Office européen des brevets**

(11) **EP 1 760 297 B1**

(12) **EUROPEAN PATENT SPECIFICATION**

(45) Date of publication and mention
of the grant of the patent:
**04.01.2012 Bulletin 2012/01**

(51) Int Cl.:
*F02D 41/14* (2006.01)  *F02D 41/06* (2006.01)
*F02N 15/08* (2006.01)  *F02N 11/08* (2006.01)
*B60K 6/24* (2007.10)

(21) Application number: **06018578.2**

(22) Date of filing: **05.09.2006**

(54) **Load drive system and engine start control system**

Steuerungssystem eines Verbrauchers und Steuerungssystem eines Maschinenstarts

Système de contrôle de charge et système de contrôle de démarrage

(84) Designated Contracting States:
**DE FR GB**

(30) Priority: **06.09.2005 JP 2005257517**
**06.09.2005 JP 2005257518**

(43) Date of publication of application:
**07.03.2007 Bulletin 2007/10**

(73) Proprietor: **Honda Motor Co., Ltd.**
**Tokyo 107-8556 (JP)**

(72) Inventors:
• **Okuda, Kazuma**
**Wako-shi**
**Saitama 351-0193 (JP)**
• **Komatsu, Yasuyuki**
**Wako-shi**
**Saitama 351-0193 (JP)**

• **Aoki, Shigeru**
**Wako-shi**
**Saitama 351-0193 (JP)**
• **Fujiwara, Tadashi**
**Wako-shi**
**Saitama 351-0193 (JP)**
• **Nakahara, Youichi**
**Wako-shi**
**Saitama 351-0193 (JP)**

(74) Representative: **Trossin, Hans-Jürgen et al**
**Weickmann & Weickmann**
**Postfach 860 820**
**81635 München (DE)**

(56) References cited:
**EP-A1- 0 729 858**    **EP-A2- 0 903 492**
**EP-A2- 1 209 355**    **JP-A- 2004 346 834**
**US-A1- 2002 171 383**  **US-A1- 2005 167 170**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

FIELD OF THE INVENTION

The present invention relates to a load drive system, in which an endless power transmitting member for transmitting a torque is wound around a driving member mounted on a rotary shaft of a motor and a follower member mounted on a load shaft of a load, and a motor control means drives the load shaft while controlling an output torque of the motor based on a motor rotational speed detected by a motor rotational speed detecting means. The present invention also relates to an engine start control system, in which an endless power transmitting member is wound around a driving member mounted on a rotary shaft of a motor and a follower member mounted on a crankshaft of an engine, and a motor control means cranks the crankshaft to start the engine while controlling an output torque of the motor based on a motor rotational speed detected by a motor rotational speed detecting means.

DESCRIPTION OF THE RELATED ART

There is an engine start control system which is known from Japanese Patent Application Laid-open No. 2004-346834. In this system, when a crankshaft of an engine is cranked through an endless belt by a motor to start the engine, the rotational speed of the crankshaft is increased to a starting rotational speed in a time substantially equivalent to that in the case where the output torque of the motor is applied at a maximum to the engine, by controlling the output torque of the motor so that the rotational speed of the crankshaft is increased at a constant angular acceleration in accordance with a time elapsed from the beginning of the starting.

A load that cranks the crankshaft of the engine is periodically varied in accordance with a crank angle, providing a problem: when the cranking is conducted so that the engine rotational speed is linearly increased, the tension of the endless belt is periodically varied in accordance with the variation in load, and a slipping of the endless belt on a pulley occurs at the moment of increasing of the tension of the endless belt, thereby deteriorating a smooth starting.

Therefore, it is conceivable that the cranking is conducted while periodically varying the engine rotational speed so as to secure a constant tension of the endless belt. In this case, the output torque of the motor is periodically varied so that the engine rotational speed is periodically varied. However, an inertial moment exists on a rotor of the motor, leading to a possibility: when the motor rotational speed is varied, an inertial torque proportional to a product of the inertial moment of the rotor and an angular acceleration of the motor is generated, and an error is generated in the output torque of the motor in correspondence to this inertial moment, thereby making it impossible to control the motor rotational speed with a good accuracy, resulting a variation in tension of the endless belt.

EP 1 209 355 A2 (TOYOTA MOTOR CO LTD [JP]) 29 May 2002 (2002-05-29) discloses a load drive system, in which an endless power transmitting member for transmitting a torque is wound around a driving member mounted on a rotary shaft of a motor and a follower member mounted on a load shaft of a load, and a motor control means drives the load shaft while controlling an output torque of the motor based on a motor rotational speed detected by a motor rotational speed detecting means, wherein the load drive system includes a motor angular acceleration detecting means for detecting a motor angular acceleration; and the motor control means calculates an inertial torque of the motor from a product of the motor angular acceleration detected by the motor angular acceleration detecting means and an inertial moment of the motor, and corrects the output torque of the motor by this inertial torque.

SUMMARY OF THE INVENTION

Accordingly, it is an object of the present invention to minimize variation in tension of an endless power transmitting member in consideration of the influence of an inertial torque generated in the case where the motor rotational speed is varied, when driving a load shaft of a load through the endless power transmitting member by an output torque of a motor. Another object of the present invention is to minimize variation in tension of an endless power transmitting member in consideration of the influence of an inertial torque generated in the case where the motor rotational speed is varied, when starting an engine through the endless power transmitting member by an output torque of a motor.

According to a feature of the present invention, there is provided a load drive system, in which an endless power transmitting member for transmitting a torque is wound around a driving member mounted on a rotary shaft of a motor and a follower member mounted on a load shaft of a load, and a motor control means drives the load shaft while controlling an output torque of the motor based on a motor rotational speed detected by a motor rotational speed detecting means, characterized in that the load drive system includes a motor angular acceleration detecting means for detecting a motor angular acceleration; and the motor control means calculates an inertial torque of the motor from a product of the motor angular acceleration detected by the motor angular acceleration detecting means and an inertial moment of the motor, and corrects the output torque of the motor by this inertial torque.

With the above arrangement, the motor control means for driving the load shaft while controlling the output torque of the motor base on the motor rotational speed detected by the rotational speed detecting means, calculates the inertial torque of the motor from the product of the motor angular acceleration detected by the motor angular acceleration detecting means and the inertial moment of the motor, and corrects the output torque of the motor by this inertial torque. Therefore, the motor rotational speed can be controlled with a good accuracy in accordance with variation in load generated when the load shaft is driven by the motor, thereby minimizing the variation in tension of the endless power transmitting member.

According to a further feature of the present invention, there is provided a load drive system, in which an endless power transmitting member for transmitting a torque is wound around a driving member mounted on a rotary shaft of a motor and a follower member mounted on a load shaft of a load, and a motor control means drives the load shaft while controlling an output torque of the motor based on a motor rotational speed detected by a motor rotational speed detecting means, characterized in that the load drive system includes a motor angular acceleration detecting means for detecting a motor angular acceleration; and the motor control means calculates a deviation between a preset target motor angular acceleration and the motor angular acceleration detected by the motor angular acceleration detecting means, calculates an inertial torque of the motor from a product of this deviation and an inertial moment of the motor, and corrects the output torque of the motor by this inertial torque.

With the above arrangement, the motor control means for driving the load shaft while controlling the output torque of the motor base on the motor rotational speed detected by the rotational speed detecting means, calculates the deviation between the preset target motor angular acceleration and the motor angular acceleration detected by the motor angular acceleration detecting means, calculates the inertial torque of the motor from the product of the deviation and the inertial moment of the motor, and corrects the output torque of the motor by the inertial torque. Therefore, even when the target motor angular acceleration is varied during driving of the load shaft by the motor, the motor rotational speed can be controlled with a good accuracy in accordance with the variation in load of the load shaft, thereby minimizing the variation in tension of the endless power transmitting member.

According to a further feature of the present invention, there is provided an engine start control system, in which an endless power transmitting member is wound around a driving member mounted on a rotary shaft of a motor and a follower member mounted on a crankshaft of an engine, and a motor control means cranks the crankshaft to start the engine while controlling an output torque of the motor based on a motor rotational speed detected by a motor rotational speed detecting means, characterized in that the engine start control system includes a motor angular acceleration detecting means for detecting a motor angular acceleration; and the motor control means calculates an inertial torque from a product of the motor angular acceleration detected by the motor angular acceleration detecting means and an inertial moment of the motor, and corrects the output torque of the motor by this inertial torque.

With the above arrangement, the motor control means for cranking the crankshaft to start the engine while controlling the output torque of the motor based on the motor rotational speed detected by the rotational speed detecting means, calculates the inertial torque from the product of the motor angular acceleration detected by the motor angular acceleration detecting means and the inertial moment of the motor, and corrects the output torque of the motor by the inertial torque. Therefore, the motor rotational speed can be controlled with a good accuracy in accordance with the variation in load generated when the crankshaft is cranked by the motor, thereby minimizing the variation in tension of the endless power transmitting member.

According to a further feature of the present invention, there is provided an engine start control system, in which an endless power transmitting member is wound around a driving member mounted on a rotary shaft of a motor and a follower member mounted on a crankshaft of an engine, and a motor control means cranks the crankshaft to start the engine while controlling an output torque of the motor based on a motor rotational speed detected by a motor rotational speed detecting means, characterized in that the engine start control system includes a motor angular acceleration detecting means for detecting a motor angular acceleration; and the motor control means calculates a deviation between a preset target motor angular acceleration and the motor angular acceleration detected by the motor angular acceleration detecting means, calculates an inertial torque of the motor from a product of this deviation and an inertial moment of the motor, and corrects the output torque of the motor by this inertial torque.

With the above arrangement, the motor control means adapted to crank the crankshaft to start the engine while controlling the output torque of the motor based on the motor rotational speed detected by the motor rotational speed detecting means, calculates the deviation between the preset target motor angular acceleration and the motor angular acceleration detected by the motor angular acceleration detecting means, calculates the inertial torque of the motor from the product of the deviation and the inertial moment of the motor, and corrects the output torque of the motor by the inertial torque. Therefore, even when the target motor angular acceleration is varied during cranking of the crankshaft by the motor, the motor rotational speed can be controlled with a good accuracy in accordance with the variation in load of the crankshaft, thereby minimizing the variation in tension of the endless power transmitting member.

According to a further feature of the present invention, in addition to the third or fourth feature, the system further includes a crankshaft phase detecting means for outputting a phase signal indicative of a phase of the crankshaft for every predetermined crank angle; and the motor angular acceleration detecting means detects a motor angular acceleration based on a time interval between the crankshaft phase signals outputted by the crankshaft phase detecting means.

With the above arrangement, the motor angular acceleration detecting means detects the motor angular acceleration based on the time interval between the crankshaft phase signals outputted for every predetermined crank angle by the crankshaft phase detecting means. Therefore, the motor angular acceleration can be detected merely by measuring the time interval between the crankshaft phase signals.

According to a further feature of the present invention, in addition to any of the third to fifth features, the motor control means controls the output torque of the motor to a value lower than a torque capable of being transmitted in a state in which a frictional force between the driving pulley and the endless power transmitting member is normal, when the motor rotational speed detected by the motor rotational speed detecting means is equal to or lower than a rotational speed after starting of the engine; and the motor control means controls the output torque of the motor to a value equal to or lower than a predetermined output torque, when the motor rotational speed detected by the motor rotational speed detecting means is equal to or higher than a rotational speed higher by a predetermined value than the rotational speed after starting of the engine; and the predetermined output torque is set at a value capable of being transmitted even in a state in which the frictional force between the driving pulley and the endless frictional transmitting member is decreased.

With the above arrangement, in the starting of the engine by the output torque of the motor, when the motor rotational speed detected by the motor rotational speed detecting means is equal to or lower than a rotational speed after the starting of the engine, namely, when the endless power transmitting member is not being slipped or when the slipping is small, the output torque of the motor is controlled to a value lower than a torque capable of being transmitted in a state in which the frictional force between the driving pulley and the endless power transmitting member is normal. Therefore, the increase of the slipping of the endless power transmitting member can be suppressed. In addition, when the motor rotational speed detected by the motor rotational speed detecting means is equal to or larger than the rotational speed higher by the predetermined value than the rotational speed after starting of the engine, namely, when the slipping of the endless power transmitting member is large, the output torque of the motor is controlled to a value equal to or lower than the predetermined torque. Therefore, the slipping can be converged to conduct the starting of the engine without hindrance. Particularly, the predetermined output torque is set at the value capable of being transmitted even in the state in which the frictional force between the driving pulley and the endless transmitting means is decreased, and hence the slipping can be reliably converged. In this way, the slipping of the endless power transmitting member is suppressed using only the motor rotational speed as a parameter without use of the engine rotational speed as a parameter, and hence the number of the sensors can be reduced to reduce the cost.

According to a further feature of the present invention, in addition to the sixth feature, the output torque of the motor changes with a step before and after a rotational speed higher by the predetermined value than the rotational speed after starting of the engine.

With the above arrangement, the output torque of the motor changes with a step before and after the rotational speed higher by the predetermined value than the rotational speed after starting of the engine. Therefore, when the slipping between the driving pulley and the endless power transmitting member is increased, the output torque of the motor can be rapidly decreased to converge the slipping early.

According to an further feature of the present invention, in addition to the sixth or seventh feature, the predetermined output torque is a torque larger than zero.

With the above arrangement, even if the output torque of the motor is controlled to a value equal to or higher than the predetermined torque when the slipping of the endless power transmitting member is large, the output torque cannot be decreased to zero. Therefore, the delay in starting the engine can be minimized.

A driving pulley 12 in each of embodiments corresponds to the driving member of the present invention; a crankshaft 13 in the embodiment corresponds to the load shaft of the present invention; a follower pulley 14 in the embodiment corresponds to the follower member of the present invention; an endless belt 15 in the embodiment corresponds to the endless power transmitting member of the present invention; an engine E in the embodiment corresponds to the load of the present invention; and an electronic control unit U in the embodiment corresponds to the motor control means of the present invention.

The above and other objects, features and advantages of the invention will become apparent from the preferred embodiments taken in conjunction with the accompanying drawings.

BRIEF DESCRIPTION OF THE DRAWINGS

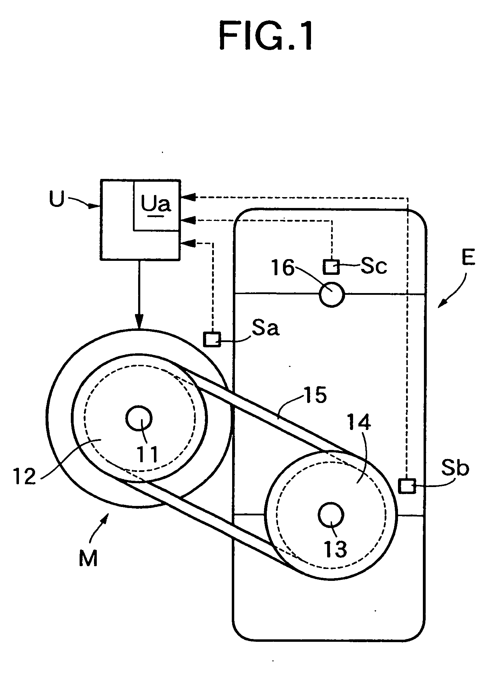

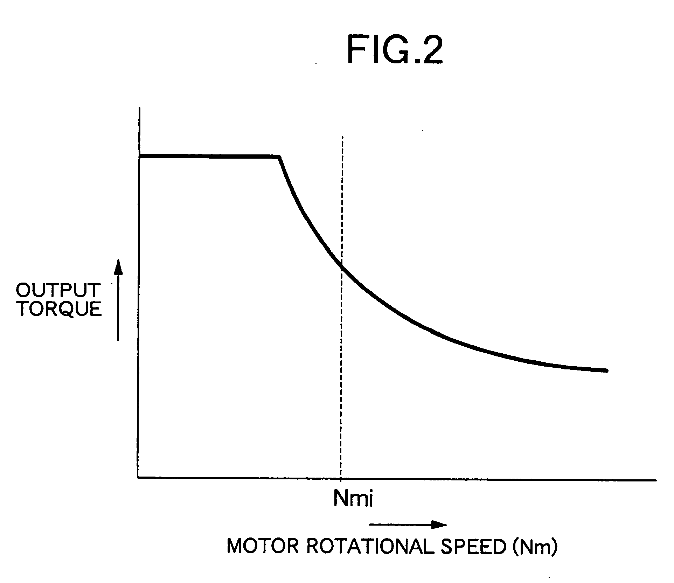

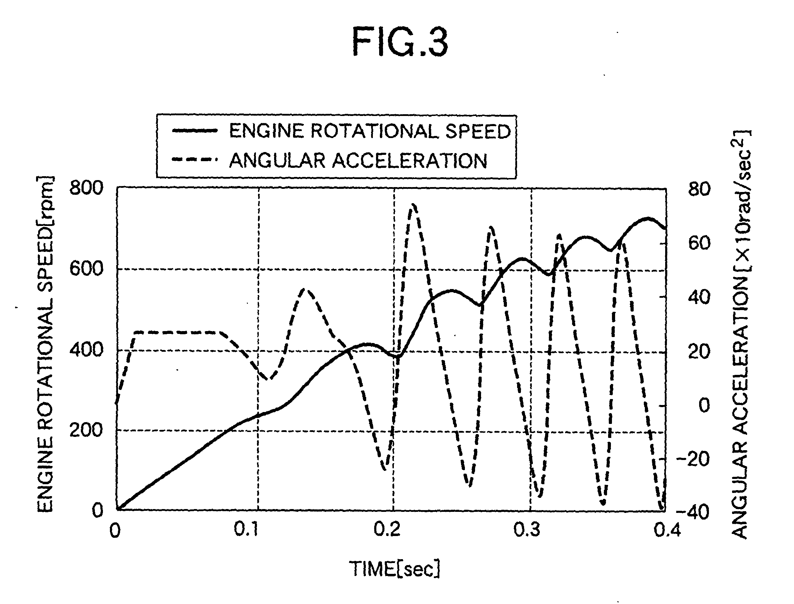

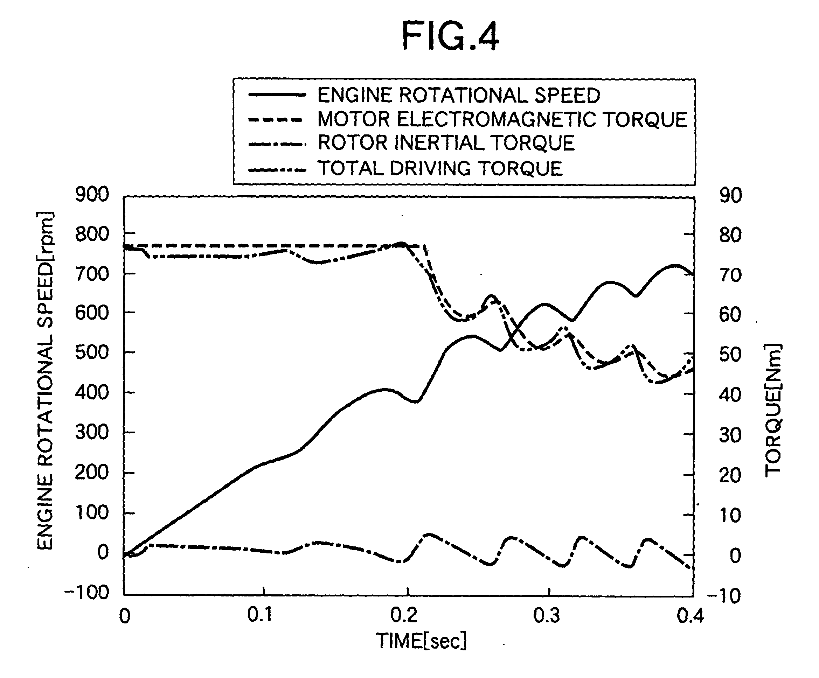

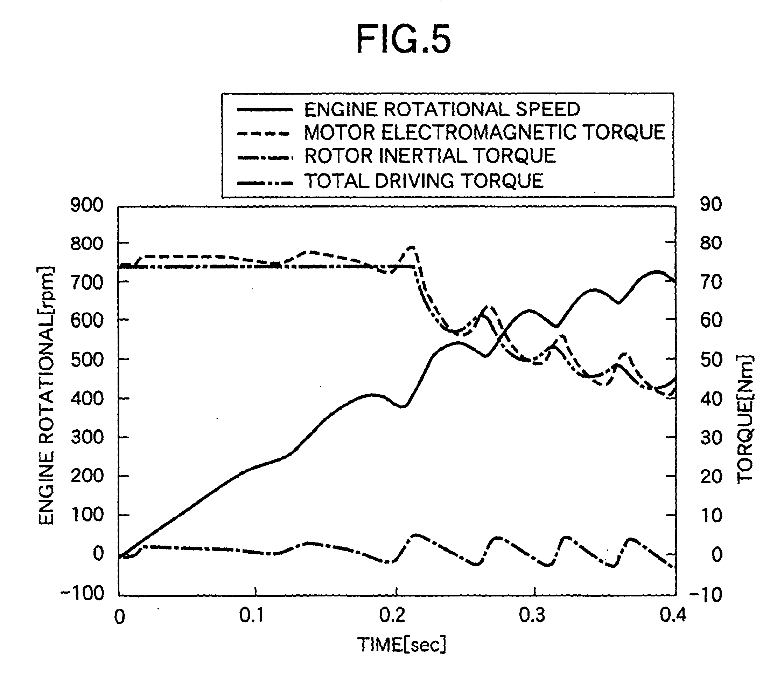

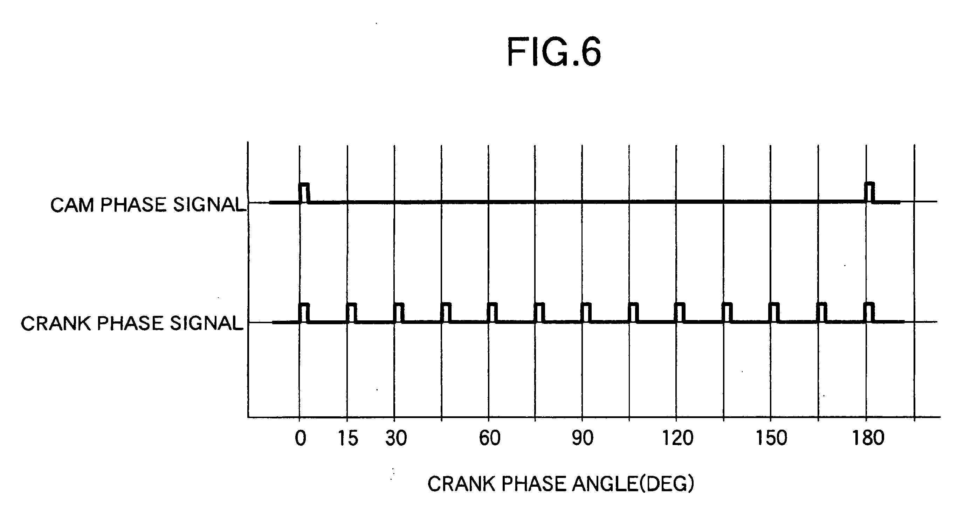

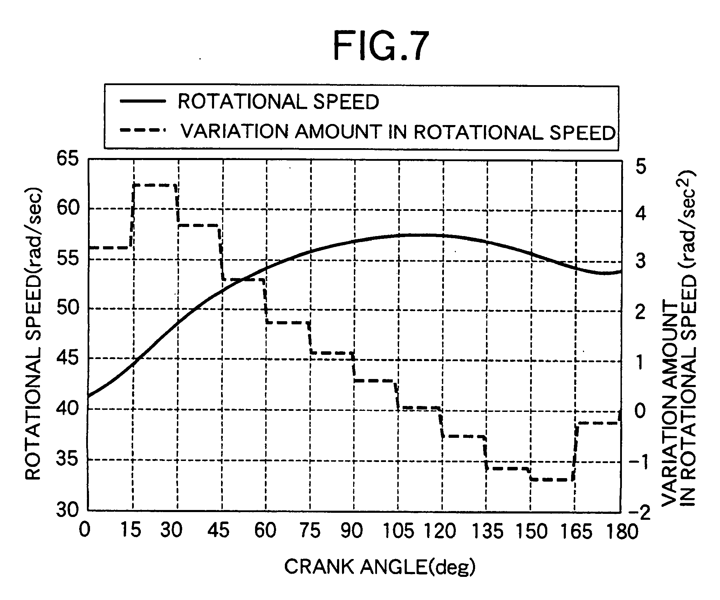

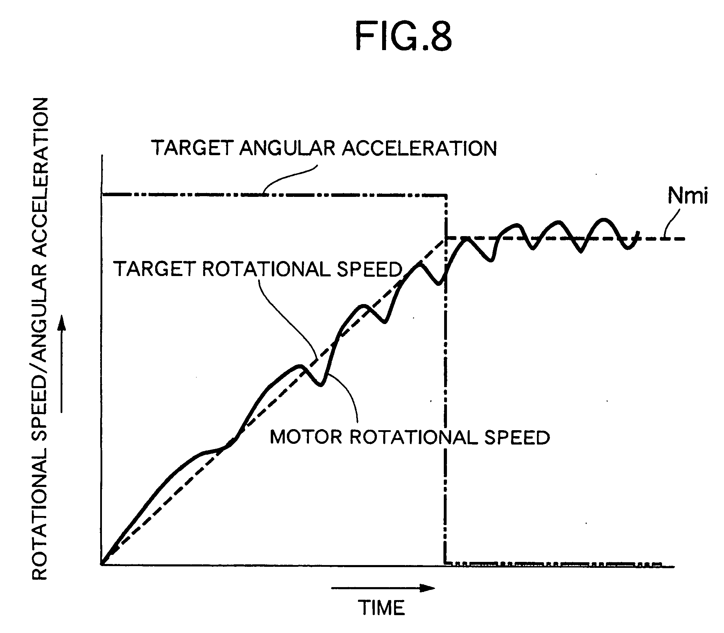

Figs.1 to 8 show a first embodiment of the present invention, wherein Fig. 1 is a view showing an engine in an automobile including a starting motor; Fig. 2 is a graph showing the relationship between a rotational speed and an output torque of a typical motor; Fig. 3 is a graph showing characteristics of variations in rotational speed of the engine and in angular acceleration upon starting; Fig.4 is a diagram for explaining a conventional technique for setting an electromagnetic torque (a target torque) of a motor; Fig.5 is a diagram for explaining a technique according to the present embodiment for setting an electromagnetic torque (a target torque) of the motor; Fig. 6 is a diagram for explaining a cam-phase signal and a crank-phase signal; Fig.7 is a diagram for explaining a technique for detecting an angular acceleration of the motor; Fig. 8 is a diagram for explaining a technique for detecting a target angular acceleration of the motor.

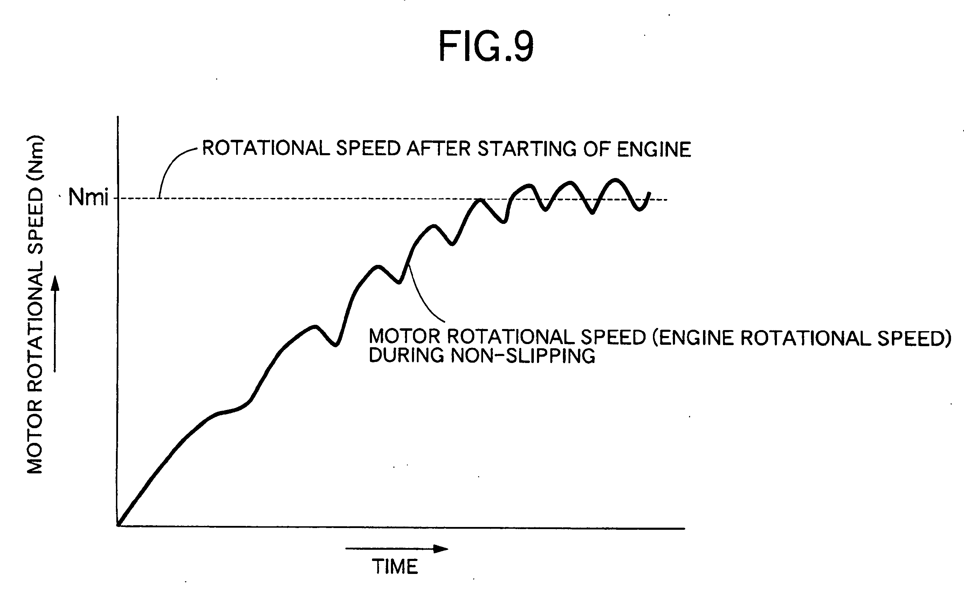

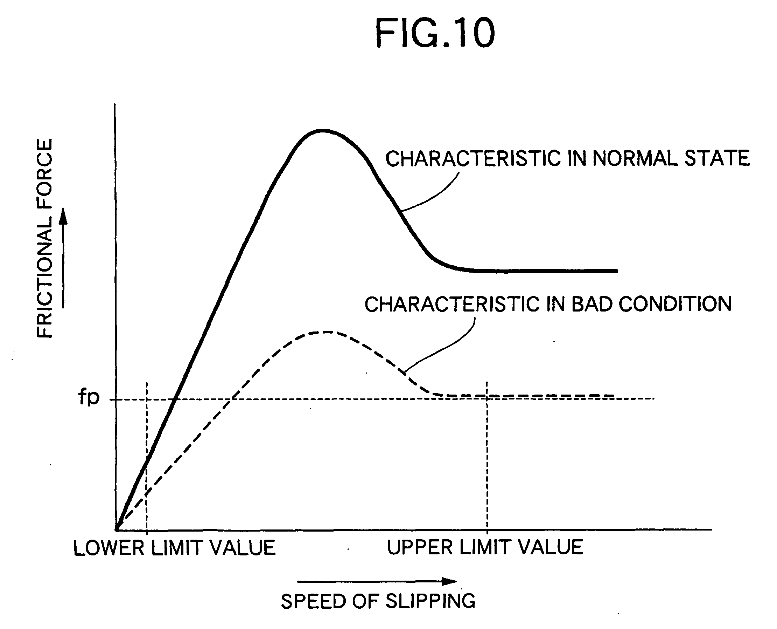

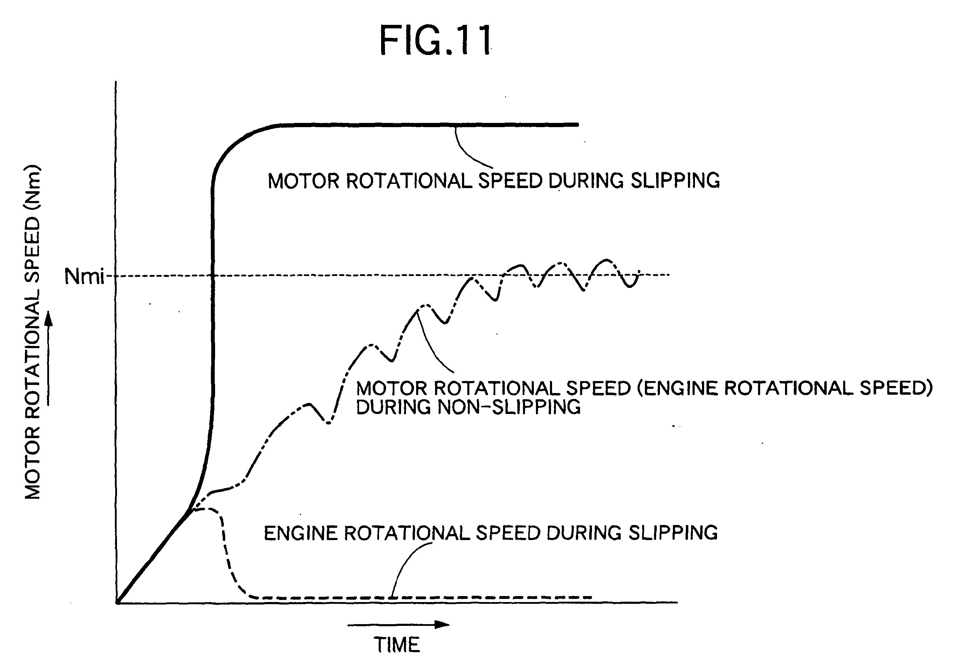

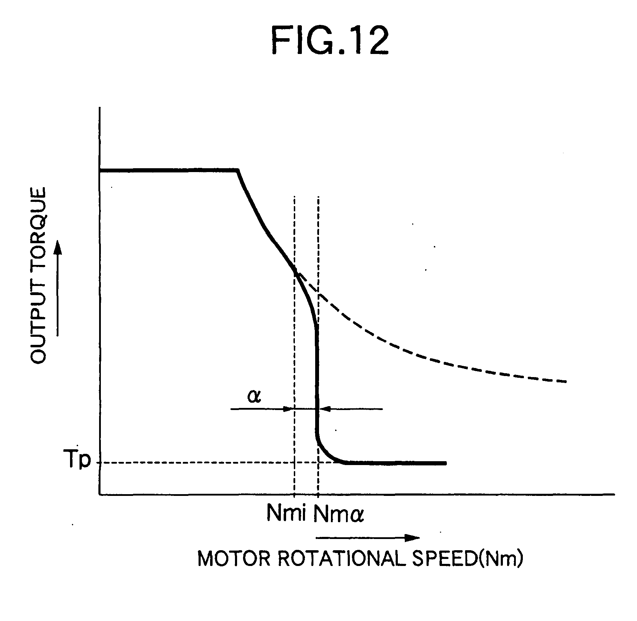

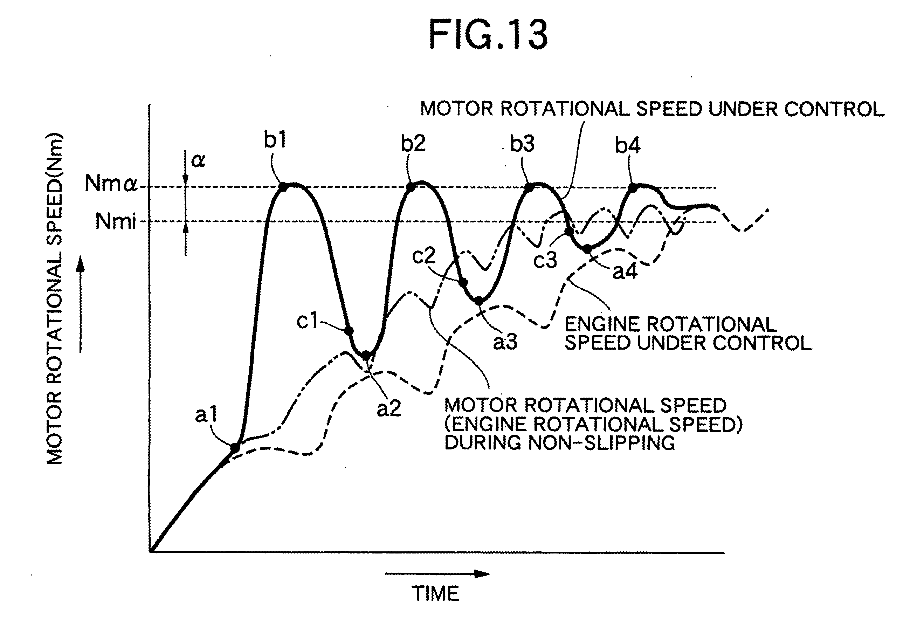

Figs. 9 to 13 show a second embodiment of the present invention, wherein Fig.9 is a graph showing a characteristic of variation in rotational speed of the motor (rotational speed of the engine) when no slipping occurs; Fig.10 is a graph showing a variation in frictional force corresponding to a speed of slipping between a pulley and an endless belt; Fig.11 is a graph showing characteristics of variations in engine rotational speed and motor rotational speed when the slipping has occurred; Fig. 12 is a graph showing the relationship between the motor rotational speed and the output torque in the present embodiment; and Fig. 13 is a graph showing characteristics of variations in motor rotational speed and engine rotational speed in the present embodiment.

## DETAILED DESCRIPTION OF PREFERRED EMBODIMENTS

A first embodiment of the present invention will now be described with reference to Figs.1 to 8.

As shown in Fig.1, a starting motor M is mounted on an engine E for an automobile. An endless belt 15 is wound around a driving pulley 12 fixed to a rotary shaft 11 of the motor M and a follower pulley 14 fixed to a crankshaft 13 of the engine E. When the motor M is driven, a torque of the rotary shaft 11 is transmitted through the driving pulley 12, the endless belt 15 and the follower pulley 14 to the crankshaft 13, whereby the crankshaft 13 is cranked to start the engine E. In the present embodiment, for convenience, the diameter of the driving pulley 12 and the diameter of the follower pulley 14 are set to be equal to each other.

An electronic control unit U receives a rotational speed of the motor M detected by a motor rotational speed detecting means Sa (hereinafter referred to as a motor rotational speed Nm), a phase of the crankshaft 13 detected by a crankshaft phase detecting means Sb, and a phase of a camshaft 16 detected by a camshaft phase detecting means Sc; and controls an output torque of the motor M based on the motor rotational speed Nm, the phase of the crankshaft 13, and the phase of the camshaft 16.

Fig.2 is a graph showing the relationship between the rotational speed and the output torque of a typical motor, wherein the output torque is constant until the motor rotational speed Nm reaches a predetermined rotational speed, and if the motor rotational speed Nm exceeds a predetermined rotational speed, the output torque is decreased in a hyperbolic shape with an increase in motor rotational speed Nm. Reference symbol Nmi in Fig.2 is a rotational speed of the motor M after starting of the engine. The rotational speed Nmi after starting of the engine is a motor rotational speed Nm corresponding to an engine rotational speed when the engine E is brought into a completely exploded state to complete the starting. In the present invention, the rotational speed Nmi of the motor M after starting of the engine coincides with an engine rotational speed at that time, because the driving pulley 12 and the follower pulley 14 have the same diameter.

A solid line in Fig.3 is a graph showing a characteristic of variation in engine rotational speed (motor rotational speed) in the case where no slipping occurs in the endless belt 15. When the crankshaft 13 is cranked, a piston is reciprocally moved within a cylinder to generate a periodic variation in load, and hence when the motor M is controlled so that the engine rotational speed is linearly increased, the tension of the endless belt 15 is periodically varied. As a result, a slipping occurs between the driving pulley 12 and the endless belt 15 at the moment of increasing of the tension of the endless belt 15, so that the output torque of the motor M cannot be effectively transmitted to the crankshaft 13. In order to solve this problem, the engine rotational speed is controlled in accordance with the periodic variation in load caused by the cranking, as shown by the solid line in Fig. 3, thereby maintaining the tension of the endless belt 15 constant to inhibit the slipping. A broken line in Fig.3 is an engine angular-acceleration corresponding to the engine rotational speed shown by the solid line. The engine-angular acceleration is varied in accordance with the engine rotational speed.

An electromagnetic torque of the motor M shown by a broken line in Fig.4 is for obtaining an engine rotational speed shown by a solid line (a rotational speed for ensuring that the tension of the endless belt 15 is maintained at a given value). In the case where the motor M is being rotated at a given angular speed and an inertial torque which will be described hereinafter is not generated, when the motor M is driven using the electromagnetic torque of the motor M shown by the broken line as a torque command value, the engine rotational speed shown by the solid line is obtained, whereby the tension of the endless belt 15 must be maintained at a given value. In practice, however, an inertial torque shown by a one-dot dashed line is applied to a rotor of the motor M whose angular acceleration is varied, leading to a problem: the motor M outputs a total driving torque shown by a two-dot dashed line and provided by adding the inertial torque to the electromagnetic torque, resulting in that an engine rotational speed shown by the solid line is not obtained, and thus the tension of the endless belt 15 is varied.

Therefore, in the embodiment shown in Fig.5, an inertial torque is subtracted from an electromagnetic torque of the motor (see a broken line) to obtain a total driving torque (see a two-dot dashed line) as a torque command value for providing an engine rotational speed ensuring that the tension of the endless belt 15 is maintained at a given value, and the drive of the motor M is controlled using this total driving torque as the torque command value. As a result, the torque command value serves to maintain the tension of the endless belt 15 at the given value.

The above-described inertial torque of the motor M can be calculated by multiplying an inertial moment of the rotor of the motor M by an angular acceleration $\alpha$ of the motor M. The angular acceleration $\alpha$ of the motor M can be calculated by differentiating with time the motor rotational speed Nm (namely, the angular speed $\omega$ of the motor M) detected by the motor rotational speed detecting means Sa, but in the present embodiment, the angular acceleration $\alpha$ of the motor M is calculated based on a phase of the crankshaft detected by the crankshaft phase detecting means Sb and a phase of the camshaft detected by the camshaft phase detecting means Sc.

As shown in Fig.6, the crankshaft phase detecting means Sb outputs a crankshaft phase signal for every crank angle of 15°, and the camshaft phase detecting means Sc outputs a camshaft phase signal for every crank angle of 180°. The camshaft phase signal is used as a start timing of one cycle of rotation of the crankshaft 13; a time interval is measured between the crankshaft phase signals outputted for every crank angle of 15°; and the crank angle of 15° is divided by the time interval, thereby calculating a variation quantity of interval rotational speed in each period for every crank angle of 180° (namely, an angular acceleration of the crankshaft 13). Fig. 7 shows one example of the variation quantity of interval rotational speed.

In the present embodiment, because the driving pulley 12 and the follower pulley 14 have the same diameter, the angular acceleration of the crankshaft 13 calculated by the above-described technique coincides with the angular acceleration $\alpha$ of the motor M. When the diameters of the driving pulley 12 and the follower pulley 14 are different from each other, an angular acceleration $\alpha$ of the motor M is calculated by correcting the angular acceleration of the crankshaft 13 based on a ratio between the diameters.

As described above, the torque command valve for the motor M in cranking the crankshaft 13 of the engine E is determined according to the following equation:

$$\texttt{Torque command valve = Target torque (electromagnetic torque)}$$
$$\texttt{- Inertial torque.}$$

Therefore, it is possible to compensate for the effect of the inertial torque to provide an appropriate torque command value to the motor M, and to vary the motor rotational speed Nm (engine rotational speed) periodically in accordance with a variation in load of the crankshaft 13 to maintain the tension of the endless belt 15 at a given value, thereby effectively inhibiting the slipping of the endless belt 15 on the driving pulley 12.

In addition, the inertial torque is determined according to the following equation:

$$\texttt{Inertial torque = Inertial moment of rotor} \times \texttt{Angular acceleration}$$
$$\texttt{of motor.}$$

However, when the motor M is controlled based on the target angular acceleration, the inertial torque is determined according to the following equation:

$$\texttt{Inertial torque = Inertial moment of rotor} \times \texttt{(Angular}$$
$$\texttt{acceleration of motor - Target angular acceleration).}$$

In Fig. 8, upon starting of the engine E, the motor rotational speed Nm is varied as shown by a solid line, but a target rotational speed is set as shown by a broken line approximately representing the motor rotational speed, and a target angular acceleration corresponding to the target rotational speed is set as shown by a dashed line. Reference symbol Nmi in Fig. 8 is a rotational speed of the motor M after the starting of the engine. The rotational speed Nmi after the starting of the engine is a motor rotational speed corresponding to the engine rotational speed when the engine E is brought into a completely exploded state to complete the starting. In the present embodiment, the rotational speed Nmi of the motor M after the starting of the engine coincides with the engine rotational speed at that time, because the driving pulley 12 and the follower pulley 14 have the same diameter.

When the target angular acceleration is determined in this manner, an inertial torque corresponding to a product of the target angular acceleration and an inertial moment of the rotor is generated, and hence an inertial torque of the motor M can be further accurately calculated by the correction made by subtracting an inertial torque based on the target angular acceleration from an inertial torque based on an angular acceleration of the motor.

A second embodiment of the present invention will now be described with reference to Figs.9 to 13.

Fig.9 is a graph showing a characteristic of variation in motor rotational speed Nm (engine rotational speed) in the case where no slipping occurs in an endless belt 15. When a crankshaft 13 is cranked, a piston is reciprocally moved within a cylinder to generate a periodic variation in load, and hence when the motor M is controlled so that the engine rotational speed Nm is linearly increased, the tension of the endless belt 15 is periodically varied. As a result, a slipping occurs between a driving pulley 12 and the endless belt 15 at the moment of increasing of the tension of the endless belt 15, and thus the output torque of the motor M cannot be effectively transmitted to the crankshaft 13. In order to solve this problem, the engine rotational speed is controlled in accordance with the periodic variation in load caused by the cranking, as shown by the solid line in Fig. 9, whereby the tension of the endless belt 15 is maintained to be constant to inhibit the slipping.

A solid line in Fig.3 is a graph showing a characteristic of variation in engine rotational speed (motor rotational speed) in the case where no slipping occurs in the endless belt 15. When the crankshaft 13 is cranked, a piston is reciprocally moved within a cylinder to generate a periodic variation in load, and hence when the motor M is controlled so that the engine rotational speed is linearly increased, the tension of the endless belt 15 is periodically varied. As a result, a slipping occurs between the driving pulley 12 and the endless belt 15 at the moment of increasing of the tension of the endless belt 15, so that the output torque of the motor M cannot be effectively transmitted to the crankshaft 13. In order to solve this problem, the engine rotational speed is controlled in accordance with the periodic variation in load caused by the cranking, as shown by the solid line in Fig. 3, thereby maintaining the tension of the endless belt 15 constant to inhibit the slipping.

When the frictional force between the driving pulley 12 and the endless belt 15 is normal, the engine E can be started without hindrance by controlling the motor rotational speed Nm, as shown in Fig.9, but in a bad condition such as when the endless belt 15 takes on water, the frictional force between the driving pulley 12 and the endless belt 15 is decreased to cause the endless belt 15 to slip, thereby making the normal starting difficult. Fig.10 is a graph showing variations in frictional force in accordance with a speed of slipping between the driving pulley 12 and the endless belt 15. It can be seen in Fig. 10 that the frictional force in the bad condition is low as compared with the normal condition, and both in the bad condition and the normal condition, the frictional force is increased with an increase in slipping speed to reach a peak value, and then is turned to decrease to finally converge to a given value.

Now, when the slipping occurs between the driving pulley 12 and the endless belt 15 in the process of driving the motor M to crank the crankshaft 13 in order to start the engine E, the motor rotational speed Nm is rapidly increased due to the load decreased by the slipping, as shown in Fig.11, and the output torque of the motor M is not transmitted to the engine E, resulting in that the engine rotational speed is dropped down to 0 (zero) and thus the engine E cannot be started.

However, in the present embodiment, as shown in Fig.12, when the motor rotational speed detected by the motor rotational speed detecting means Sa is increased to a value equal to or larger than a rotational speed Nm$\alpha$ higher by a predetermined value $\alpha$ than the rotational speed Nmi after the starting of the engine, the torque of the motor M is suddenly decreased down to Tp by the command from the electronic control unit U. This torque Tp is such a value that no slipping occurs between the driving pulley 12 and the endless belt 15 even in a bad condition where the endless belt 15 takes on water to decrease the friction force. The torque Tp corresponds to a frictional force fp shown in Fig.10.

As a result, a slipping occurs between the driving pulley 12 and the endless belt 15 at a point a1 in Fig. 13 to rapidly increase the motor rotational speed Nm, and when the motor rotational speed Nm reaches a value equal to or larger than a rotational speed Nm$\alpha$ higher by a predetermined value $\alpha$ than the rotational speed Nmi after the starting of the engine at a point b1, the output torque of the motor M is rapidly decreased down to Tp in Fig.12. This output torque Tp is such a value that no slipping occurs between the driving pulley 12 and the endless belt 15 even in a bad condition such as when the endless belt 15 takes on water, and hence the speed of slipping between the driving pulley 12 and the endless belt 15 is decreased, whereby the rotational speed Nm of the motor is turned to decrease. When the speed of slipping between the driving pulley 12 and the endless belt 15 is dropped to a lower limit (see Fig.10) at a point c1, the motor M generates a usual output torque again, and hence a slipping occurs again between the driving pulley 12 and the endless belt 15 at a point a2, whereby the motor rotational speed Nm is rapidly increased.

In this way, while the control of a2 → b2 → c2 and a3 → b3 → c3 is being repeated as in the control of a1 → b1 → c1, the engine rotational speed (see a broken line) is increased while being slightlydelayed from an increase characteristic (see a dashed line) at the time of non-slipping, and in a short time, the engine rotational speed is increased to the rotational speed Nmi after the starting of the engine, thereby starting the engine without hindrance. In the above-described process of starting the engine E, the output torque of the motor M is periodically increased and decreased, whereby the slipping speed is also periodically increased and decreased between lower and upper limit values shown in Fig.10. However, because a peak value of the friction force exists between the lower and upper limit values of the slipping speed, the endless belt 15 which has been once slipped can be forced to bite again onto the driving pulley 12, whereby the slipping can be effectively suppressed.

In addition, when the slipping occurs between the driving pulley 12 and the endless belt 15 and the motor rotational speed Nm is increased to the value equal to or larger than the rotational speed Nmα, the output torque of the motor M is rapidly decreased down to Tp. Therefore, it is possible to converge the slipping early, as compared with a case where the output torque of the motor M is slowly decreased.

As discussed above, according to the present invention, the slipping of the endless belt 15 is suppressed using only the motor rotational speed Nm as a parameter without use of the engine rotational speed as a parameter, and hence the number of the sensors can be reduced to reduce the cost.

Although the embodiments of the present invention have been described in detail, various modifications in design may be made without departing from the subj ect matter of the present invention.

For example, the driving pulley 12 and the follower pulley 14 have the same diameter in the embodiments, but they may have different diameters.

In addition, the endless power transmitting member is not limited to the endless belt 15 in the embodiments, and may be another member such as an endless rope, or may be an endless chain wound around the driving pulley and the follower pulley. In this case, according to the present invention, the maximum load applied to the endless chain can be decreased, thereby improving the durability.

Further, Tp, which is the target value for decreasing the output torque of the motor M upon the occurrence of the slipping between the driving pulley 12 and the endless belt 15, may be zero, but is desirable to be a value larger than zero. This is because if the output torque of the motor M is decreased down to zero, there is a possibility that the starting of the engine E is delayed.

A motor control means cranks a crankshaft to start an engine, while controlling an electromagnetic torque generated by a motor based on a motor rotational speed detected by a motor rotational speed detecting means. The motor control means calculates an inertial torque (see a one-dot dashed line) of a rotor of the motor from a product of a motor angular acceleration detected by a motor angular acceleration detecting means and an inertial moment of the motor, and drives the motor by a total driving torque (see a two-dot dashed line) provided by correcting the electromagnetic torque of the motor by this inertial torque. Therefore, the motor rotational speed, namely, an engine rotational speed (see a solid line) can be controlled with a good accuracy in accordance with variation in load generated when the crankshaft is cranked by the motor, thereby minimizing variation in tension of an endless belt.

### Claims

1.  An engine start control system, in which an endless power transmitting member (15) is wound around a driving member (12) mounted on a rotary shaft (11) of a motor (M) and a follower member mounted on a crankshaft (13) of an engine (E), and a motor control means (U) cranks the crankshaft (13) to start the engine (E) while controlling an output torque of the motor (M) based on a motor rotational speed (Nm) detected by a motor rotational speed detecting means (Sa),
    wherein the engine start control system includes a motor angular acceleration detecting means (Ua) for detecting a motor angular acceleration (α); and
    wherein the motor control means (U)

    a) calculates an inertial torque from a product of the motor angular acceleration (α) detected by the motor angular acceleration detecting means (Ua) and an inertial moment of the motor (M), and corrects the output torque of the motor (M) by this inertial torque, or
    b) calculates a deviation between a preset target motor angular acceleration (at) and the motor angular acceleration (α) detected by the motor angular acceleration detecting means (Ua), calculates an inertial torque of the motor (M) from a product of this deviation and an inertial moment of the motor (M), and corrects the output torque of the motor (M) by this inertial torque,

    **characterized in that** the motor control means (U) controls the output torque of the motor (M) to a value lower than a torque capable of being transmitted in a state in which a frictional force between the driving pulley (12) and the endless power transmitting member (15) is normal, when the motor rotational speed (Nm) detected by the motor rotational speed detecting means (Sa) is equal to or lower than a rotational speed (Nmi) after starting of the engine; and the motor control means (U) controls the output torque of the motor (M) to decrease to a value equal to or lower than a predetermined output torque (Tp), when the motor rotational speed (Nm) detected by the motor rotational speed detecting means (Sa) is equal to or higher than a rotational speed (Nm$\alpha$) higher by a predetermined value ($\alpha$) than the rotational speed (Nmi) after starting of the engine; and
the predetermined output torque (Tp) is set at a value capable of being transmitted even in a state in which the frictional force between the driving pulley (12) and the endless power transmitting member (15) is decreased, wherein the predetermined output torque (Tp) is such a value that no slipping occurs between the driving pulley (12) and the endless power transmitting member (15).

2. An engine start control system according to claim 1,
further including a crankshaft phase detecting means (Sb) for outputting a phase signal indicative of a phase of the crankshaft (13) for every predetermined crank angle,
**characterized in that** the motor angular acceleration detecting means (Ua) detects a motor angular acceleration ($\alpha$) based on a time interval between the crankshaft phase signals outputted by the crankshaft phase detecting means (Sb).

3. An engine start control system according to claim 1 or claim 2,
**characterized in that** the output torque of the motor (M) changes with a step before and after a rotational speed (Nm$\alpha$) higher by the predetermined value (a) than the rotational speed (Nmi) after starting of the engine.

4. An engine start control system according to any of the preceding claims, **characterized in that** the predetermined output torque (Tp) is a torque larger than zero.

**Patentansprüche**

1. Brennkraftmaschinen-Startsteuerungssystem, worin ein endloses Kraftübertragungselement (15) um ein an einer Drehwelle (11) eines Elektromotors (M) angebrachtes Antriebselement (12) und ein an einer Kurbelwelle (13) einer Brennkraftmaschine (E) angebrachtes Folgerelement herumgelegt ist, und ein Motorsteuerungsmittel (U) die Kurbelwelle (13) andreht, um die Brennkraftmaschine (E) zu starten, während ein Ausgangsdrehmoment (M) des Elektromotors basierend auf einer von einem Motordrehzahlerfassungsmittel (Sa) erfassten Motordrehzahl (Nm) gesteuert/geregelt wird,
worin das Brennkraftmaschinen-Startsteuerungssystem ein Motorwinkelbeschleunigungs-Erfassungsmittel (Ua) zum Erfassen einer Motorwinkelbeschleunigung ($\alpha$) enthält; und
worin das Motorsteuerungsmittel (U)

a) ein Trägheitsmoment aus einem Produkt der von dem Motorwinkelbeschleunigungs-Erfassungsmittel (Ua) erfassten Motorwinkelbeschleunigung ($\alpha$) und einem Trägheitsmoment des Motors (M) berechnet und das Ausgangsdrehmoment des Elektromotors (M) um dieses Trägheitsmoment korrigiert, oder
b) eine Abweichung zwischen einer gegenwärtigen Soll-Motorwinkelbeschleunigung ($\alpha$t) und der von dem Motorwinkelbeschleunigungs-Erfassungsmittel (Ua) erfassten Motorwinkelbeschleunigung ($\alpha$) berechnet, ein Trägheitsmoment des Elektromotors (M) aus einem Produkt dieser Abweichung und einem Trägheitsmoment des Elektromotors (M) berechnet, und das Ausgangsdrehmoment des Elektromotors (M) um dieses Trägheitsmoment korrigiert, **dadurch gekennzeichnet, dass** in einem Zustand, in dem eine Reibkraft zwischen der Antriebsriemenscheibe (12) und dem endlosen Kraftübertragungselement (15) normal ist, das Motorsteuerungsmittel (U) das Ausgangsdrehmoment des Elektromotors (M) auf einen geringeren Wert als ein übertragbares Drehmoment steuert/regelt, wenn die von dem Motordrehzahlerfassungsmittel (Sa) erfasste Motordrehzahl (Nm) gleich oder niedriger als eine Drehzahl (Nmi) nach dem Starten der Brennkraftmaschine ist; und

das Motorsteuerungsmittel (U) das Ausgangsdrehmoment des Elektromotors (M) so steuert/regelt, dass es auf einen Wert gleich oder niedriger als ein vorbestimmtes Ausgangsdrehmoment (Tp) abnimmt, wenn die von dem Motordrehzahlerfassungsmittel (Sa) erfasste Motordrehzahl (Nm) um einen vorbestimmten Wert ($\alpha$) gleich oder höher als eine Drehzahl (Nm$\alpha$) ist, die um einen vorbestimmten Wert ($\alpha$) höher ist als die Drehzahl (Nmi) nach dem Starten der Brennkraftmaschine; und
das vorbestimmte Ausgangsdrehmoment (Tp) auch in einem Zustand, in dem die Reibkraft zwischen der Antriebsriemenscheibe (12) und dem endlosen Kraftübertragungselement (15) verringert ist, auf einen übertragbaren Wert gesetzt wird,

worin das vorbestimmte Ausgangsdrehmoment (Tp) ein derartiger Wert ist, das zwischen der Antriebsriemenscheibe (12) und dem endlosen Kraftübertragungselement (15) kein Schlupf auftritt.

2. Brennkraftmaschinen-Steuerungssystem nach Anspruch 1, das ferner ein Kurbelwellenphasen-Erfassungsmittel (Sb) aufweist, zur Ausgabe eines Phasensignals, das eine Phase der Kurbelwelle (13) bei jedem vorbestimmten Kurbelwinkel angibt,
**dadurch gekennzeichnet, dass** das Motorwinkelbeschleunigungs-Erfassungsmittel (Ua) eine Motorwinkelbeschleunigung ($\alpha$) basierend auf einem Zeitintervall zwischen den von den Kurbelwellenphasen-Erfassungsmittel (Sb) ausgegebenen Kurbelwellenphasensignalen erfasst.

3. Brennkraftmaschinen-Startsteuerungssystem nach Anspruch 1 oder Anspruch 2, **dadurch gekennzeichnet, dass** sich das Ausgangsdrehmoment des Elektromotors (M) mit einer Stufe vor und nach einer Drehzahl (Nm$\alpha$) verändert, die um den vorbestimmten Wert (a) höher ist als die Motordrehzahl (Nmi) nach dem Starten der Brennkraftmaschine.

4. Brennkraftmaschinen-Startsteuerungssystem nach einem der vorhergehenden Ansprüche, **dadurch gekennzeichnet, dass** das vorbestimmte Ausgangsdrehmoment (Tp) ein Drehmoment größer als Null ist.

## Revendications

1. Système de commande de démarrage de moteur thermique, dans lequel un organe de transmission de puissance sans fin (15) est enroulé autour d'un organe d'entraînement (12) monté sur un arbre rotatif (11) d'un moteur électrique (M) et d'un organe suiveur monté sur un vilebrequin (13) d'un moteur thermique (E), et un moyen de commande du moteur électrique (U) enclenche le vilebrequin (13) pour démarrer le moteur thermique (E) tout en commandant un couple de sortie du moteur électrique (M) en se basant sur une vitesse de rotation du moteur électrique (Nm) détectée par un moyen de détection de vitesse de rotation du moteur électrique (Sa),
dans lequel le système de commande de démarrage de moteur thermique comprend un moyen de détection d'accélération angulaire du moteur électrique (Ua) pour détecter une accélération angulaire du moteur électrique ($\alpha$) ; et
dans lequel le moyen de commande de moteur électrique (U)

   a) calcule un couple inertiel à partir d'un produit de l'accélération angulaire du moteur électrique ($\alpha$) détectée par le moyen de détection d'accélération angulaire du moteur électrique (Ua) et un moment inertiel du moteur électrique (M), et corrige le couple de sortie du moteur électrique (M) par ce couple inertiel, ou
   b) calcule un écart entre une accélération angulaire du moteur électrique cible préétablie (at) et l'accélération angulaire du moteur électrique ($\alpha$) détectée par le moyen de détection d'accélération angulaire du moteur électrique (Ua), calcule un couple inertiel du moteur électrique (M) à partir d'un produit de cet écart et d'un moment inertiel du moteur électrique (M), et corrige la couple de sortie du moteur électrique (M) par ce couple inertiel,

**caractérisé en ce que** le moyen de commande du moteur électrique (U) commande le couple de sortie du moteur électrique (M) à une valeur inférieure à un couple pouvant être transmis dans un état dans lequel une force de frottement entre la poulie d'entraînement (12) et l'organe de transmission de puissance sans fin (15) est normale, quand la vitesse de rotation du moteur électrique (Nm) détectée par le moyen de détection de vitesse de rotation du moteur électrique (Sa) est égale ou inférieure à une vitesse de rotation (Nmi) après le démarrage du moteur thermique ; et
le moyen de commande du moteur électrique (U) commande le couple de sortie du moteur électrique (M) afin qu'il diminue à une valeur égale ou inférieure à un couple de sortie prédéterminé (Tp), quand la vitesse de rotation du moteur électrique (Nm) détectée par le moyen de détection de la vitesse de rotation du moteur électrique (Sa) est égale ou supérieure à une vitesse de rotation (Nm$\alpha$) supérieure d'une valeur prédéterminée ($\alpha$) à la vitesse de rotation (Nmi) après démarrage du moteur thermique ; et
le couple de sortie prédéterminé (Tp) est établi à une valeur pouvant être transmise même dans un état dans lequel la force de frottement entre la poulie d'entraînement (12) et l'organe de transmission de puissance sans fin (15) est diminuée,
dans lequel le couple de sortie prédéterminé (Tp) est d'une valeur telle qu'aucun glissement n'a lieu entre la poulie d'entraînement (12) et l'organe de transmission de puissance sans fin (15).

2. Système de commande de démarrage de moteur thermique selon la revendication 1,

comprenant en outre un moyen de détection de phase de vilebrequin (Sb) pour fournir en sortie un signal de phase indiquant une phase du vilebrequin (13) pour chaque position de vilebrequin prédéterminée,
**caractérisé en ce que** le moyen de détection d'accélération angulaire du moteur électrique (Ua) détecte une accélération angulaire de moteur électrique ($\alpha$) en se basant sur un intervalle de temps entre les signaux de phase de vilebrequin fournis en sortie par le moyen de détection de phase de vilebrequin (Sb).

3. Système de commande de démarrage de moteur thermique selon la revendication 1 ou la revendication 2,
**caractérisé en ce que** le couple de sortie du moteur électrique (M) change avec un palier avant et après une vitesse de rotation (Nm$\alpha$) supérieure de la valeur prédéterminée (a) à la vitesse de rotation (Nmi) après démarrage du moteur thermique.

4. Système de commande de démarrage de moteur thermique selon l'une quelconque des revendications précédentes,
**caractérisé en ce que** le couple de sortie prédéterminé (Tp) est un couple supérieur à zéro.

# FIG.1

FIG.2

# FIG.3

# FIG.4

Legend:
- ——— ENGINE ROTATIONAL SPEED
- ——— MOTOR ELECTROMAGNETIC TORQUE
- —·—· ROTOR INERTIAL TORQUE
- —··—·· TOTAL DRIVING TORQUE

EP 1 760 297 B1

# FIG.5

Legend:
- ENGINE ROTATIONAL SPEED
- MOTOR ELECTROMAGNETIC TORQUE
- ROTOR INERTIAL TORQUE
- TOTAL DRIVING TORQUE

X-axis: TIME[sec]
Left Y-axis: ENGINE ROTATIONAL[rpm]
Right Y-axis: TORQUE[Nm]

EP 1 760 297 B1

# FIG.6

EP 1 760 297 B1

# FIG.7

EP 1 760 297 B1

# FIG.8

# FIG.9

MOTOR ROTATIONAL SPEED (Nm)

Nmi

ROTATIONAL SPEED AFTER STARTING OF ENGINE

MOTOR ROTATIONAL SPEED (ENGINE ROTATIONAL SPEED) DURING NON-SLIPPING

TIME

EP 1 760 297 B1

# FIG.10

FRICTIONAL FORCE

CHARACTERISTIC IN NORMAL STATE

CHARACTERISTIC IN BAD CONDITION

fp

LOWER LIMIT VALUE    UPPER LIMIT VALUE

SPEED OF SLIPPING

EP 1 760 297 B1

# FIG.11

MOTOR ROTATIONAL SPEED DURING SLIPPING

MOTOR ROTATIONAL SPEED (ENGINE ROTATIONAL SPEED)
DURING NON-SLIPPING

ENGINE ROTATIONAL SPEED DURING SLIPPING

MOTOR ROTATIONAL SPEED (Nm)

Nmi

TIME

EP 1 760 297 B1

# FIG.12

# FIG.13

MOTOR ROTATIONAL SPEED UNDER CONTROL

ENGINE ROTATIONAL SPEED UNDER CONTROL

MOTOR ROTATIONAL SPEED (ENGINE ROTATIONAL SPEED) DURING NON-SLIPPING

MOTOR ROTATIONAL SPEED(Nm)

TIME

EP 1 760 297 B1

**EP 1 760 297 B1**

**REFERENCES CITED IN THE DESCRIPTION**

**Patent documents cited in the description**

- JP 2004346834 A
- EP 1209355 A2